# EUROPÄISCHE PATENTSCHRIFT

(11) **EP 1 240 506 B1**
(45) Veröffentlichungstag und Bekanntmachung des Hinweises auf die Patenterteilung: **17.11.2010**
(21) Anmeldenummer: 00989845.3
(22) Anmeldetag: 09.12.2000
(51) Int. Cl.: G01N 27/407

(54) **GASSENSOR ZUR BESTIMMUNG DER KONZENTRATION VON GASKOMPONENTEN IN GASGEMISCHEN UND DESSEN VERWENDUNG**
GAS SENSOR FOR DETERMINING THE CONCENTRATION OF GAS COMPONENTS IN GAS MIXTURES AND USE THEREOF
CAPTEUR DE GAZ SERVANT A DETERMINER LA CONCENTRATION DE COMPOSANTES GAZEUSES DANS DES MELANGES GAZEUX, ET SON UTILISATION

(30) Priorität: 15.12.1999 DE 19960338
(43) Veröffentlichungstag der Anmeldung: 18.09.2002
(73) Patentinhaber: ROBERT BOSCH GMBH, 70442 Stuttgart (DE)
(72) Erfinder: SCHULTE, Thomas, 70376 Stuttgart (DE); WAHL, Thomas, 75172 Pforzheim (DE); MUELLER, Bernd, 28790 Schwanewede-Aschwarden (DE)
(86) Internationale Anmeldenummer: PCT/DE2000/004385
(87) Internationale Veröffentlichungsnummer: WO 2001/044798

(56) Entgegenhaltungen:
- EP-A- 0 678 740
- US-A- 4 770 760
- US-A- 5 034 112

## Beschreibung

Die Erfindung betrifft einen Gassensor zur Bestimmung von Gaskomponenten nach dem Oberbegriff des Hauptanspruchs.

### Stand der Technik

Aus der DE OS 196 52 968 ist ein Sensorelement zur Bestimmung der NOₓ-Konzentration in Gasgemischen bekannt, das auf dem Zusammenspiel zweier elektrochemischer Pumpzellen beruht. In einem Meßgasraum des Sensorelements befinden sich zwei innere Pumpelektroden, die mit einer gemeinsamen, in einem Referenzgaskanal angeordneten äußeren Pumpelektrode zusammengeschaltet sind. Die in Einströmrichtung des Gasgemisches erste der beiden Pumpzellen bewirkt einen Sauerstofftransport aus dem Meßgasraum in den Referenzgaskanal. Die innere Pumpelektrode dieser ersten, sauerstofftransportierenden Pumpzelle ist mit einem mehrschichtigen Aufbau aus einer gemischtleitenden Metalloxidschicht und einer elektrisch isolierenden Aluminiumoxidschicht bedeckt, die eine selektive Entfernung des im Gasgemisch vorhandenen Sauerstoffs bewirkt, ohne den Gehalt an Stickoxiden zu verändern. Diese werden dann an der inneren Pumpelektrode der zweiten Pumpzelle zersetzt und der dabei freigesetzte Sauerstoff abgepumpt. Als Maß für die im Gasgemisch enthaltene Konzentration an Stickoxiden wird der Pumpstrom der zweiten Pumpzelle herangezogen.

Aus der EP 678 740 A1 ist ebenfalls ein Gassensor zur Bestimmung der NOₓ-Konzentration in Gasgemischen bekannt. Er umfaßt zwei Meßgasräume mit jeweils einer Pumpzelle, die in einer Schichtebene eines planaren keramischen Trägers nebeneinander angeordnet sind. Das Meßgas strömt über eine Diffusionsöffnung in den ersten Meßgasraum ein, in dem sich eine erste Pumpzelle befindet. Mittels der ersten Pumpzelle wird im ersten Meßgasraum ein vorbestimmter Sauerstoffpartialdruck durch Hinein- oder Herauspumpen von Sauerstoff eingestellt. Eine ebenfalls im ersten Meßgasraum angeordnete Konzentrationszelle ermöglicht über die Bestimmung der an den Elektroden der Konzentrationszelle anliegenden elektrischen Spannung (elektromotorischen Kraft) die Kontrolle eines konstant niedrigen Sauerstoffpartialdrucks im ersten Meßgasraum. Über eine weitere Diffusionsöffnung gelangt das auf einen konstanten Sauerstoffpartialdruck eingestellte Gasgemisch in den zweiten Meßraum. Im zweiten Meßgasraum ist eine weitere Pumpzelle angeordnet. Deren innere Pumpelektrode ist aus Rhodium ausgeführt und ermöglicht die Zersetzung von Stickoxiden zu N₂ und O₂. Der an der inneren Pumpelektrode entstehende reduzierte Sauerstoff wird über eine angelegte Pumpspannung abgepumpt. Der Pumpstrom der zweiten Pumpzelle ist proportional zur Stickoxidkonzentration des Gasgemisches.

In beiden Fällen muß in aufwendiger Weise zunächst ein konstant niedriger Sauerstoffpartialdruck des Gasgemischs im Sensorelement eingestellt werden, bevor mit den dort zum Einsatz kommenden inneren Pumpelektroden eine Bestimmung der Stickoxide erfolgen kann.

Darüber hinaus ist aus der US-A-4,770,760 ein NOₓ-Sensor bekannt, der eine elektrochemische Messzelle aufweist, wobei als ein mögliches katalytisch aktives Material Lanthanoxid genannt ist.

### Vorteile der Erfindung

Der erfindungsgemäße Gassensor mit den kennzeichnenden Merkmalen der unabhängigen Ansprüche hat den Vorteil, daß zur Bestimmung der Stickoxidkonzentration im Meßgas eine elektrochemische Meßzelle herangezogen wird, deren NOₓ-sensitive Elektrode aus einem Material besteht, das auch bei hohen Sauerstoffpartialdrücken eine zuverlässige Bestimmung der Stickoxidkonzentration in einem Gasgemisch ermöglicht. Dies erübrigt den Einbau von sauerstofftransportierenden Pumpzellen in das Sensorelement und vereinfacht den Sensoraufbau daher erheblich.

Durch die in den Unteransprüchen aufgeführten Maßnahmen sind vorteilhafte Weiterbildungen und Verbesserungen des im Hauptanspruch angegebenen Gassensors möglich. So ermöglicht beispielsweise die Verwendung der erfindungsgemäßen NOₓ-sensitiven Pumpzelle den Verzicht auf die Einarbeitung eines Meßgasraums sowie eines Referenzgaskanals in das dem Gassensor zugrundeliegende Sensorelement, da die NOₓ-sensitive Pumpelektrode wie auch die Gegenelektrode direkt dem Abgas ausgesetzt werden können. Besonders vorteilhaft ist eine Sandwich-Anordnung beider Elektroden übereinander auf der Großfläche des Sensorelements.

Ist im Sensorelement dagegen ein Referenzgaskanal vorgesehen, so ermöglicht eine dort angeordnete Referenzelektrode zusammen mit der NOₓ-sensitiven Elektrode eine alternative simultane Bestimmung der Stickoxidkonzentration des Gasgemischs über eine Spannungsmessung.

### Zeichnung

Ein Ausführungsbeispiel der Erfindung ist in der Zeichnung dargestellt und in der nachfolgenden Beschreibung näher erläutert. Es zeigen Figur 1 einen Querschnitt durch die Großfläche eines dem erfindungsgemäßen Gassensor zugrundeliegenden Sensorelements sowie Figur 2 und 3 ein Sensorelement gemäß zweier weiterer Ausführungsbeispiele.

### Ausfuhrungsbeispiele

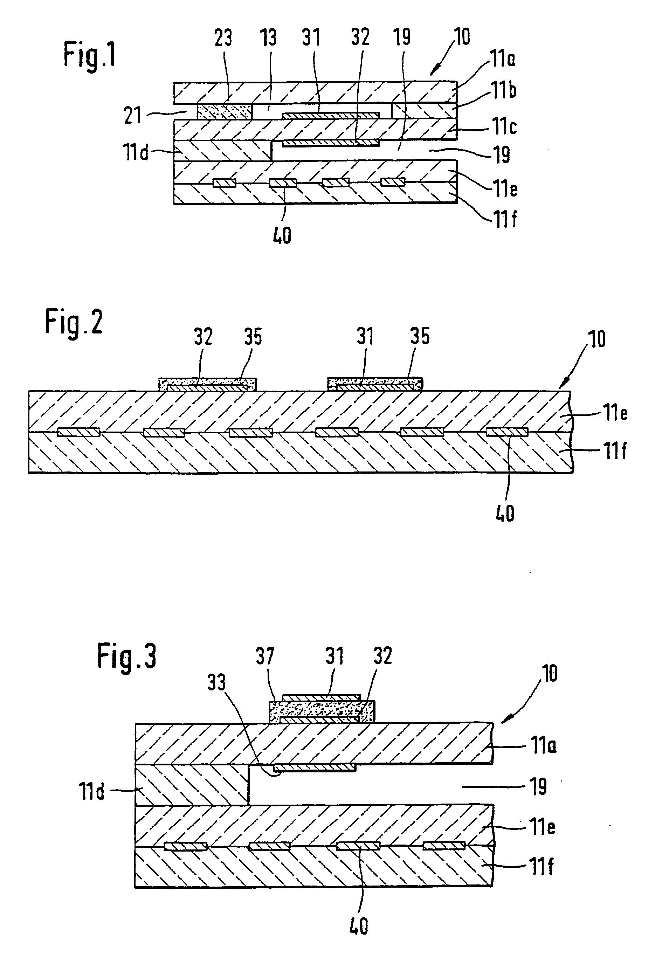

Figur 1 zeigt einen prinzipiellen Aufbau einer ersten Ausführungsform eines planaren Sensorelements 10 eines elektrochemischen Gassensors. Das Sensorelement 10 weist beispielsweise eine Mehrzahl von sauerstoffionenleitenden Festelektrolytschichten 11a, 11b, 11c, 11d, 11e und 11f auf. Die Festelektrolytschichten 11a-11f werden dabei als keramische Folien ausgeführt und bilden einen planaren keramischen Körper. Die integrierte Form des planaren keramischen Körpers des Sensorelements 10 wird durch Zusammenlaminieren der mit Funktionsschichten bedruckten keramischen Folien und anschließendem Sintern der laminierten Struktur in an sich bekannter Weise hergestellt. Jede der Festelektrolytschichten 11a-11f ist aus sauerstoffionenleitendem Festelektrolytmaterial, wie beispielsweise mit Y₂O₃ teil- oder vollstabilisiertem ZrO₂ ausgeführt.

Das Sensorelement 10 beinhaltet einen Meßgasraum 13 und beispielsweise in einer weiteren Schichtebene 11d einen Referenzgaskanal 19, der an einem Ende aus dem planaren Körper des Sensorelements 10 herausführt und mit einer Luftatmosphäre in Verbindung steht.

In den keramischen Körper des Sensorelements 10 ist ferner zwischen zwei hier nicht dargestellten elektrischen Isolationsschichten ein Widerstandsheizer 40 eingebettet. Der Widerstandsheizer dient dem Aufheizen des Sensorelements 10 auf die notwendige Betriebstemperatur.

Das Sensorelement 10 hat ferner eine Gaseintrittsöffnung 21, die das Meßgas in den ersten Meßraum 13 leitet. Die Gaseintrittsöffnung 21 ist beispielsweise in derselben Schicht wie der Meßgasraum 13 angeordnet. Am Eingang zum ersten Meßgasraum 13 ist hinter der Gaseintrittsöffnung 21 in Diffusionsrichtung des Meßgases eine erste Diffusionsbarriere 23 beispielsweise aus porösem keramischem Material ausgebildet.

Im Meßgasraum 13 ist eine innere, NOₓ-sensitive Elektrode 31 angeordnet. Die dazugehörige äußere Elektrode 32 befindet sich im Referenzgaskanal 19. Beide Elektroden 31, 32 sind zu einer Pumpzelle zusammengeschaltet. Die Elektrode 32 besteht aus einem katalytisch aktiven Material, beispielsweise aus Platin. Das Elektrodenmaterial für die Elektrode 32 wird dabei in an sich bekannter Weise als Cermet eingesetzt, um mit den keramischen Folien zu versintern. Die Kontaktierung der Elektroden 31, 32 erfolgt über nicht dargestellte Leiterbahnen, die zwischen den Festelektrolytschichten 11a und 11b geführt sind und über ebenfalls nicht dargestellte Durchkontaktierungen mit der Großfläche des Sensorelements verbunden sind.

Um zu gewährleisten, daß an der NOₓ-sensitiven Elektrode 31 eine vollständige Zersetzung der im Gasgemisch enthaltenen Stickoxide in Stickstoff und Sauerstoff eintritt, ist die NOₓ-sensitive Elektrode 31 aus einem katalytisch aktiven, oxidischen Material ausgeführt, beispielsweise aus einem lanthanhaltigen Perowskit der Zusammensetzung La₁₋ₓ Srₓ Co_{1-y} Cu_{y} O_{3-δ}. Herkömmlicherweise werden derartige Elektroden aus Rhodium oder einer Platin/Rhodiumlegierung hergestellt. Diese gestatten nur eine zuverlässige Bestimmung der Konzentration an Stickoxiden bei sehr geringen Sauerstoffkonzentrationen von beispielsweise 0.02 ppm im Gasgemisch und sind daher nur in Sensoren verwendbar, die aus dem Gasgemisch auf elektrochemischem Wege den größten Teil des im Gasgemisch enthaltenen Sauerstoffs entfernen(siehe EP 678 740 A1).

Der wesentliche Vorteil des erfindungsgemäßen Elektrodenmaterials, das einen lanthanhaltigen Perowskit umfaßt, ist, daß es eine Bestimmung der Konzentration an Stickoxiden auch bei einem Gehalt von 2 bis 20% Sauerstoff im Gasgemisch zuläßt. Obwohl in diesen sauerstoffreichen Gasgemischen die Stickoxide im Vergleich zum Sauerstoff in einem ungünstigen Verhältnis von 1:1000 bis 1:10000 vorliegen, ist bei Einsatz lanthanhaltiger Perowskite eine lineare Abhängigkeit des in der Pumpzelle fließenden Pumpstroms von der Stickoxidkonzentration zu beobachten. Der im Gasgemisch vorhandene Sauerstoff wird nur in Form einer leicht erhöhten Grundlinie beobachtet, die auch bei starken Schwankungen des Sauerstoffgehaltes kaum einer Veränderung unterworfen ist.

Diese Eigenschaft ist um so unerwarteter, da bisher nur bekannt war, daß ein Perowskit gleicher Zusammensetzung als sauerstoffselektive Schutzschicht für Pumpzellen zur Entfernung von molekularem Sauerstoff aus Gasgemischen dienen kann (siehe DE OS 196 52 968 A1). An dieser Schutzschicht wird nur molekularer Sauerstoff absorbiert während hingegen Stickoxide nicht katalytisch zersetzt werden. Die Schutzschicht liegt jedoch im Unterschied zur vorliegenden Erfindung als elektrisch isolierte Metalloxidschicht vor und ist nicht mit einer Pumpspannung beaufschlagt.

Die hohe Meßgenauigkeit des erfindungsgemäß verwendeten lanthanhaltigen Perowskits als NOₓ-sensitive Elektrode 31 auch bei hohen Sauerstoffanteilen im Gasgemisch ermöglicht alternativ auch die Anordnung dieser Elektrode auf der direkt dem Gasgemisch ausgesetzten Großfläche des Sensorelements 10 und damit den Verzicht auf die Einarbeitung eines Meßgasraums 13 in das Sensorelement. Wird beispielsweise die äußere Elektrode 32 ebenfalls auf der dem Gasgemisch ausgesetzten Großfläche des Sensorelements ausgebildet, so vereinfacht sich der Sensoraufbau weiter, da auch auf einen Referenzgaskanal verzichtet werden kann. Ein Sensorelement dieser Ausführungsart ist in Figur 2 dargestellt. Die Elektroden 31, 32 sind zum Schutz vor Verunreinigungen zusätzlich mit einer porösen gasdurchlässigen Schutzschicht 35 beispielsweise aus CeO₂ versehen.

Eine weitere Ausführungsform der Erfindung besteht darin, die Elektroden 31, 32 nicht, wie in Figur 2 dargestellt, nebeneinander auf der Großfläche des Sensorelements anzuordnen, sondern sandwichartig übereinander und durch eine poröse, gasdurchlässige und sauerstoffionenleitende Festelektrolytschicht 37 getrennt. Ein derartiges Ausführungsbeispiel ist in Figur 3 dargestellt. Die Anordnung einer Meß- und einer Referenzelektrode in ubereinanderliegenden Schichten auf der Großfläche eines Sensorelements ist auch bei sogenannten Mischpotentialsensoren üblich.

Wird auf die Einarbeitung eines Referenzgaskanals in das Sensorelement nicht verzichtet, so kann beispielsweise eine darin angeordnete Referenzelektrode 33 gemäß dem in Figur 3 dargestellten Ausführungsbeispiel mit der NOₓ-sensitiven Elektrode 31 zu einer Konzentrationszelle zusammengeschaltet werden. Dies gestattet besonders vorteilhaft die simultane Bestimmung der Stickoxidkonzentration auf amperometrischem Wege über die aus den Elektroden 31 und 32 bestehende Pumpzelle und auf potentiometrischem Wege über die sich zwischen den Elektroden 31 und 33 ausbildende Potentialdifferenz.

Es ist ausdrücklich anzumerken, daß sich die Anwendung eines lanthanhaltigen Perowskits nicht auf die aufgeführten Ausführungsbeispiele beschränkt, sondern daß dieses Material auch in Stickoxidsensoren herkömmlichen Typs mit einer oder mehreren Meßgasräumen und mit einer oder mehreren Pump- und Konzentrationszellen verwendet werden kann.

Aufgrund der guten Sauerstofftoleranz des erfindungsgemäßen Sensorelements selbst bei atmosphärischen Sauerstoffgehalten ist neben dem Einsatz des Sensorelements bei der Bestimmung von Stickoxidkonzentrationen in Abgasen von Verbrennungsmotoren auch ein Einsatz in Luftgütesensoren denkbar.

## Patentansprüche

1. Gassensor zur Bestimmung der Konzentration von Gaskomponenten in Gasgemischen, insbesondere von NOₓ, mit mindestens einer elektrochemischen Messzelle, deren Meßsignal zur Bestimmung der Konzentration der Gaskomponente herangezogen wird und die eine erste und mindestens eine weitere, auf einem Festelektrolyten aufgebrachte Elektrode umfasst, wobei mindestens eine der Elektroden ein Material beinhaltet, das zumindest Stickoxide katalytisch zersetzt, **dadurch gekennzeichnet, dass** das zumindest Stickoxide katalytisch zersetzende Material einen lanthanhaltigen Perowskit umfasst.

2. Gassensor nach Anspruch 1, **dadurch gekennzeichnet, daß** das zumindest Stickoxide katalytisch zersetzende Material ein Oxid der Zusammensetzung La₁₋ₓ Srₓ Co_{1-y} Cu_{y} O_{3-δ} umfaßt.

3. Gassensor nach mindestens einem der Ansprüche 1 und 2, **dadurch gekennzeichnet, daß** die erste Elektrode (31) und die weitere Elektrode (32) als Pumpzelle zusammengeschaltet sind und daß der gemessene Pumpstrom ein Maß für die Konzentration der im Gasgemisch vorhandenen Stickoxide ist.

4. Gassensor nach mindestens einem der Ansprüche 1 bis 3, **dadurch gekennzeichnet, daß** die erste Elektrode (31) in einem in ein Sensorelement (10) integrierten Meßgasraum (13) angeordnet ist, der über einen Gaszutritt (21) mit dem Gasgemisch in Verbindung steht, und daß die erste Elektrode (31) das zumindest Stickoxide katalytisch zersetzende Material beinhaltet.

5. Gassensor nach mindestens einem der Ansprüche 1 bis 3, **dadurch gekennzeichnet, daß** die erste Elektrode (31) auf einer dem Gasgemisch ausgesetzten Großfläche eines Sensorelements (10) angeordnet ist und daß die erste Elektrode (31) das zumindest Stickoxide katalytisch zersetzende Material beinhaltet.

6. Gassensor nach Anspruch 5, **dadurch gekennzeichnet, daß** die weitere Elektrode (32) ebenfalls auf der dem Gasgemisch ausgesetzten Großfläche des Sensorelements angeordnet ist.

7. Gassensor nach mindestens einem der Ansprüche 1 bis 3, **dadurch gekennzeichnet, daß** die erste Elektrode (31) und die weitere Elektrode (32) auf einer dem Gasgemisch ausgesetzten Großfläche eines Sensorelements (10) angeordnet ist, daß die erste Elektrode (31) das zumindest Stickoxide katalytisch zersetzende Material beinhaltet, und daß das Sensorelement einen Referenzgaskanal (19) mit einer darin angeordneten Referenzelektrode (33) aufweist, die mit der ersten Elektrode (31) zu einer Konzentrationszelle geschaltet ist.

8. Gassensor nach Anspruch 7, **dadurch gekennzeichnet, daß** auf der weiteren Elektrode (32) eine Festelektrolytschicht (37) und auf der Festelektrolytschicht (37) die erste Elektrode (31) aufgebracht ist.

9. Verwendung des Gassensors nach mindestens einem der vorhergehenden Ansprüche als Luftgütesensor zur Bestimmung der Konzentration von Stickoxiden, insbesondere im Innenraum von Kraftfahrzeugen.

10. Verwendung eines Gassensors zur Bestimmung von Gaskomponenten, insbesondere NOₓ, in Abgasen von Verbrennungsmotoren, **dadurch gekennzeichnet, dass** ein Gassensor nach mindestens einem der vorhergehenden Ansprüche verwendet wird.

## Claims

1. Gas sensor for determining the concentration of gas components, in particular NOₓ, in gas mixtures, having at least one electrochemical measuring cell, the measurement signal of which is used to determine the concentration of the gas component and which comprises a first electrode and at least one further electrode applied to a solid electrolyte, wherein at least one of the electrodes contains a material which catalytically decomposes at least nitrogen oxides, **characterized in that** the material which catalytically decomposes at least nitrogen oxides comprises a lanthanum-containing perovskite.

2. Gas sensor according to Claim 1, **characterized in that** the material which catalytically decomposes at least nitrogen oxides comprises an oxide having the composition La₁₋ₓSrₓCo_{1-y}CU_{y}O_{3-δ}.

3. Gas sensor according to at least one of Claims 1 and 2, **characterized in that** the first electrode (31) and the further electrode (32) are connected together as a pumping cell, and **in that** the measured pumping flow is a measure of the concentration of the nitrogen oxides present in the gas mixture.

4. Gas sensor according to at least one of Claims 1 to 3, **characterized in that** the first electrode (31) is arranged in a measuring gas chamber (13), which is integrated in a sensor element (10) and is connected to the gas mixture via a gas inlet (21), and **in that** the first electrode (31) contains the material which catalytically decomposes at least nitrogen oxides.

5. Gas sensor according to at least one of Claims 1 to 3, **characterized in that** the first electrode (31) is arranged on a large area of a sensor element (10) exposed to the gas mixture, and **in that** the first electrode (31) contains the material which catalytically decomposes at least nitrogen oxides.

6. Gas sensor according to Claim 5, **characterized in that** the further electrode (32) is likewise arranged on the large area of the sensor element exposed to the gas mixture.

7. Gas sensor according to at least one of Claims 1 to 3, **characterized in that** the first electrode (31) and the further electrode (32) are arranged on a large area of a sensor element (10) exposed to the gas mixture, **in that** the first electrode (31) contains the material which catalytically decomposes at least nitrogen oxides, and **in that** the sensor element has a reference gas channel (19) with a reference electrode (33), which is arranged in said channel and is connected to the first electrode (31) to form a concentration cell.

8. Gas sensor according to Claim 7, **characterized in that** a solid electrolyte layer (37) is applied to the further electrode (32) and the first electrode (31) is applied to the solid electrolyte layer (37).

9. Use of the gas sensor according to at least one of the preceding claims as an air quality sensor for determining the concentration of nitrogen oxides, in particular in the interior compartment of motor vehicles.

10. Use of a gas sensor for determining gas components, in particular NOₓ, in exhaust gases from internal combustion engines, **characterized in that** a gas sensor according to at least one of the preceding claims is used.

## Revendications

1. Capteur de gaz pour la détermination de la concentration en composantes gazeuses dans des mélanges de gaz, notamment en NOx, comprenant au moins une cellule de mesure électrochimique, dont le signal de mesure est utilisé pour déterminer la concentration en composantes gazeuses et qui comprend une première électrode et au moins une deuxième électrode montée sur un électrolyte fixe, au moins l'une des électrodes contenant un matériau qui décompose au moins les oxydes d'azote par voie catalytique, **caractérisé en ce que** le matériau décomposant au moins les oxydes d'azote par voie catalytique comprend une pérovskite contenant du lanthane.

2. Capteur de gaz selon la revendication 1, **caractérisé en ce que** le matériau décomposant au moins les oxydes d'azote par voie catalytique comprend un oxyde de composition La₁₋ₓ Srₓ Co_{1-y} Cu_{y} O_{3-δ}.

3. Capteur de gaz selon au moins l'une quelconque des revendications 1 et 2, **caractérisé en ce que** la première électrode (31) et la deuxième électrode (32) sont assemblées pour former une cellule de pompe et **en ce que** le flux mesuré de la pompe est une mesure de la concentration des oxydes d'azote présents dans le mélange de gaz.

4. Capteur de gaz selon au moins l'une quelconque des revendications 1 à 3, **caractérisé en ce que** la première électrode (31) est disposée dans un espace de gaz de mesure (13) intégré dans un élément de capteur (10), qui est en liaison par le biais d'une amenée de gaz (21) avec le mélange de gaz, et **en ce que** la première électrode (31) contient le matériau décomposant au moins les oxydes d'azote par voie catalytique.

5. Capteur de gaz selon au moins l'une quelconque des revendications 1 à 3, **caractérisé en ce que** la première électrode (31) est disposée sur une grande surface d'un élément de capteur (10) exposée au mélange de gaz, et **en ce que** la première électrode (31) contient le matériau décomposant au moins les oxydes d'azote par voie catalytique.

6. Capteur de gaz selon la revendication 5, **caractérisé en ce que** la deuxième électrode (32) est également disposée sur la grande surface de l'élément de capteur exposée au mélange de gaz.

7. Capteur de gaz selon au moins l'une quelconque des revendications 1 à 3, **caractérisé en ce que** la première électrode (31) et la deuxième électrode (32) sont disposées sur une grande surface d'un élément de capteur (10) exposée au mélange de gaz, **en ce que** la première électrode (31) contient le matériau décomposant au moins les oxydes d'azote par voie catalytique, et **en ce que** l'élément de capteur présente un canal de gaz de référence (19) avec une électrode de référence (33) disposée à l'intérieur, qui est montée avec la première électrode (31) de manière à former une cellule de concentration.

8. Capteur de gaz selon la revendication 7, **caractérisé en ce que** sur la deuxième électrode (32) est montée une couche d'électrolyte fixe (37) et sur la couche d'électrolyte fixe (37) est montée la première électrode (31).

9. Utilisation du capteur de gaz selon au moins l'une quelconque des revendications précédentes en tant que détecteur de la qualité de l'air pour déterminer la concentration en oxydes d'azote, notamment dans l'habitacle de véhicules automobiles.

10. Utilisation d'un capteur de gaz pour la détermination de composantes gazeuses, notamment de NOx, dans des gaz d'échappement de moteurs à combustion interne, **caractérisée en ce que** l'on utilise un capteur de gaz selon au moins l'une quelconque des revendications précédentes.
